Europäisches Patentamt

European Patent Office

Office européen des brevets

(11) Veröffentlichungsnummer: **0 389 435**
**A1**

## (12) EUROPÄISCHE PATENTANMELDUNG

(21) Anmeldenummer: 90810207.2

(22) Anmeldetag: 15.03.90

(51) Int. Cl.⁵: **G02B 6/44, G02B 6/24, G02B 6/38**

(30) Priorität: 21.03.89 CH 1039/89

(43) Veröffentlichungstag der Anmeldung:
26.09.90 Patentblatt 90/39

(84) Benannte Vertragsstaaten:
AT BE CH DE DK ES FR GB IT LI NL SE

(71) Anmelder: "BRUGG"-KABEL AG
Klosterzelgstrasse 28
CH-5200 Brugg(CH)

(72) Erfinder: Fischer, Lukas
Alte Dorfstrasse 184
CH-5617 Tennwil(CH)

(74) Vertreter: Breiter, Heinz
Patentanwalt H. Breiter AG
Schaffhauserstrasse 27 Postfach 1163
CH-8401 Winterthur(CH)

(54) **Durchgangshalterung mit einem Lichtwellenleiterkabel.**

(57) Das Lichtwellenleiterkabel (16) in der Durchgangshalterung (26) hat eine Zugentlastung.

Die Durchgangshalterung (26) besteht im wesentlichen aus zwei in Längsrichtung (A) relativ zueinander verschiebbaren, das Lichtwellenleiterkabel (16) umgebenden Armaturen mit übereinanderschiebbaren Klemmflächen, welche parallel oder sich in Richtung der Einlaufseite (E) des optischen Kabels (16) öffnend verlaufen. Die Zugentlastung des Lichtwellenleiterkabels (16) ist im Inneren der Halterung (26) freigelegt, wenigstens teilweise zwischen den Klemmflächen verlegt und eingespannt bzw. eingeklemmt. Dadurch sind die Lichtwellenleiter (10) ohne Erleiden eines Drucks von jeglichem mechanischem Zug entlastet.

In einer Verbindungsmuffe (48) zum Verbinden von zwei Lichtwellenleiterkabeln (16) sind zwei Druchgangshalterungen (26) in einer Ringnut (58) mit einem Anschlag (60) und einem Steg (62) in Längsrichtung (A) unverschiebbar befestigt.

Fig. 5

EP 0 389 435 A1

Fig. 13

## Durchgangshalterung mit einem Lichtwellenleiterkabel

Die Erfindung bezieht sich auf eine Durchgangshalterung mit einem eingespannten zugfesten Lichtwellenleiterkabel, wobei die Durchgangshalterung im wesentlichen aus zwei in Längsrichtung relativ zueinander verschiebbaren, das Lichtwellenleiterkabel umgebenden Armaturen mit übereinander schiebbaren Klemmflächen besteht, und eine Zugentlastung des Lichtwellenleiterkabels im Innern der Halterung freigelegt ist. Weiter betrifft die Erfindung Verbindungs- oder Endmuffen mit Durchgangshalterungen.

In einem Lichtwellenleiter mit einem Kern aus einer Glas-oder Plastikfaser wird das Licht durch Beugung oder Reflexion an der Grenzfläche optisch unterschiedlicher Kernmedien geführt. Verschiedene Faserarten mit unterschiedlicher Bandbreite erlauben die Uebertragung kleiner oder grosser Datenmengen.

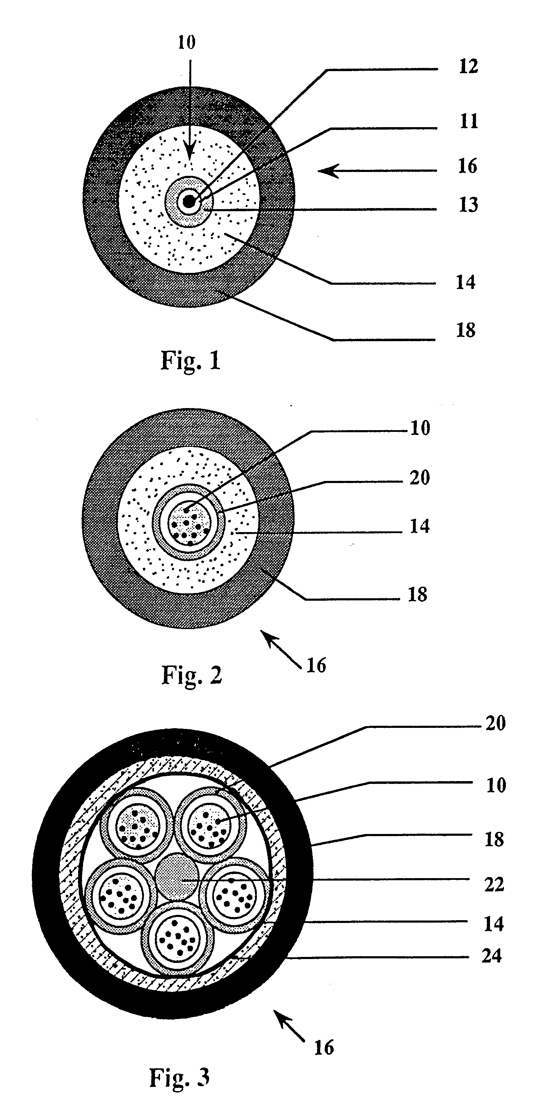

In einer ersten Variante nach Fig. 1 ist ein festummantelter, aus einem Kern inkl. Cladding 12, einer primären Ummantelung 11, meist aus Silikon, und einer sekundären Schicht 13 bestehender Lichtwellenleiter 10 dargestellt, welcher einfachheitshalber auch als Glasfaser bezeichnet wird. Der Kern inkl. Cladding 12 kann einen Durchmesser von etwa 125 μm haben, die primäre Ummantelung 11 etwa 62,5 μm, die sekundäre Schicht 13 aus einem Polyamid etwa 325 μm dick sein, was nach diesem Beispiel einen Gesamtdurchmesser von etwa 0,9 mm ergibt. Eine weitere Ummantelung, die Zugentlastung 14, besteht bevorzugt aus hochmodularen, flexiblen Fasern. Das Lichtwellenleiterkabel 16 ist durch einen Aussenmantel 18 geschützt, welcher insbesondere aus Polyvinylchlorid oder Polyurethan besteht.

Eine weitere Variante des Lichtwellenleiterkabels 16 wird in Fig. 2 in anderem Massstab dargestellt. Mehrere Glasfasern 10, gegenwärtig bis zu zehn, werden zum Schutz vor Umwelteinflüssen in einer Bündelader 20 untergebracht. Für in einer Bündelader 20 untergebrachte Glasfasern 10 (Fig. 1) erübrigt sich eine sekundäre Schicht 13. Die Bündelader 20 ist, analog zu Fig. 1, mit einer Zugentlastung 14 und einem Aussenmantel 18 umgeben. Bei Hausanschlüssen beispielsweise kann eine Bündelader 20 einen Durchmesser von etwa 3 - 4 mm, das ganze Lichtwellenleiterkabel 16 einen solchen von etwa 8 - 10 mm haben.

Nach einer nicht dargestellten Variante kann ein der Bündelader 20 entsprechendes Röhrchen, welches gelgefüllt ist, eine Glasfaser lose ummanteln.

Eine in Fig. 3 dargestellte Variante zeigt Bündeladern 20 mit mehreren Lichtwellenleitern 10, in einer Lage um ein Zentrierelement 22 zu einer Kabelseele verseilt. Eine Innenhülle 24 wird mit einer Zugentlastung 14 ummantelt, welche ihrerseits von einem Aussenmantel 18 umgeben ist. Ggf. können noch nicht dargestellte Armierungen auf- oder eingebracht sein.

Der Typ des eingesetzten Lichtwellenleiterkabels 16 richtet sich nach der Verwendung. Kabel gemäss Fig. 1 und 2 werden im allgemeinen für die Hausinstallation, Kabel gemäss Fig. 3 für Aussenkabel im Boden und in der Luft verwendet.

In Uebertragungsgeräten werden elektrische Impulse mit LED-oder Laserdioden in Lichtimpulse umgewandelt, über Lichtwellenleiter transportiert und wieder in elektrische Impulse zurückverwandelt. Es können mehrere Kanäle auf eine Glasfaser multiplexiert werden, beispielsweise bis zu 7680 Telefonkanälen.

Lichtwellenleiterkabel, im folgenden einfachheitshalber auch optische Kabel genannt, bieten bedeutende Vorteile:
- Grosse Distanzen können ohne Zwischenverstärker überbrückt werden.
- Grosse Datenmengen werden mit kleinen, leichten Kabeln übertragen.
- Eine Beeinflussung durch elektromagnetische Einwirkungen ist nicht möglich.
- Eine metallfreie Technologie ist möglich.

Die üblicherweise bis etwa 250 μm, festummantelt etwa 900 -1000 μm dicken Glasfasern sind zug-, druck- und biegeempfindlich. Eine einwandfreie Ummantelung mit einer Zugentlastung ist deshalb von wesentlicher Bedeutung. Durchgangshalterungen, beispielsweise in Verbindungs- oder Endmuffen, müssen die gleiche Zugfestigkeit aufweisen wie die optischen Kabel selbst. Aus der Elektrotechnik bekannte und auf optische Kabel übertragene Befestigungsmethoden führen nicht zu optimalen Ergebnissen und beinhalten stets eine Verletzungsgefahr für die empfindlichen Glasfasern.

So beschreibt beispielsweise die französische Patenzschrift Nr. 2 426 920 eine Klemmvorrichtung für zugfeste Lichtwellenleiterkabel. Die äusseren Verstärkungsfasern sind umgelegt und in eine in der Bohrung für das Kabel gerändelte Vorrichtung eingeführt. Die Aussenseite der Klemmvorrichtung ist konusförmig ausgebildet und wird bei einem Schraubenvorschub zusammengedrückt. Damit wird auf die optische Faser ein Druck ausgeübt, was ein hohes Risiko darstellt.

Die japanische Patentanmeldung Nr. 56-106205 zeigt ein Verankerungsstück für ein optisches Tiefseekabel. Am Ende des zu befestigenden Kabels wird die Isolationsschicht enfernt und so die Zugentlastungsbauteile freigelegt. Diese werden in einen sich von der Einführungsrichtung wegweisend öffnenden Konus eingeklemmt. Diese Ausführungsform ist offensichtlich nur für grossdimensionierte Kabel vorteilhaft anwendbar. Es muss eine grosse Klemmkraft ausgeübt werden, damit die Zugentlastungsbeispiele genügend festgeklemmt sind. Dadurch wird die Vorrichtung aufwendig.

Der Erfinder hat sich die Aufgabe gestellt, eine Durchgangshalterung der eingangs genannten Art zu schaffen, welche wirtschaftlich und mit geringem Aufwand herzustellen und anzuwenden ist, eine grosse Betriebssicherheit aufweist und einfach zu verwenden ist. Weiter sollen geeignete Vorrichtungen zur Aufnahme von Durchgangshalterungen geschaffen werden.

In bezug auf die Vorrichtung wird die Aufgabe erfindungsgemäss dadurch gelöst, dass die Klemmflächen der Armaturen in Längsrichtung oder sich in Richtung der Einlaufseite des optischen Kabels konusförmig öffnend verlaufen, und die Zugentlastung wenigstens teilweise zwischen den Klemmflächen verlegt und angespannt ist.

Nach einer ersten Ausführungsform der Erfindung umfasst die Durchgangshalterung zwei formschlüssig verlaufende, sich konusförmig öffnende Klemmflächen und Mittel zum Feststellen von Armaturen. Der sich in Richtung der Einlaufseite öffnende Winkel der Konusfläche zur Längsachse liegt vorzugsweise unterhalb etwa 45°, insbesondere bei etwa 30°. Damit ist bei optimal kleiner Kraftanwwendung eine sichere Verankerung der Zugentlastung gewährleistet.

Die Zugentlastung besteht, wie an sich bekannt ist, vorzugsweise aus hochmodularen, flexiblen Fasern, welche beispielsweise als Schnüre verseilt sein können. Als Materialien haben sich für die Fasern der Zugentlastung insbesondere Kohlenstoff, Siliziumkarbid und Aramid bewährt.

Nach einer zweiten erfindungsgemässen Ausführungsform umfasst die Durchgangshalterung eine über den Kabelmantel gestreifte, verformungsfeste Krimphülse und ein über diese Hülse geschobenes verformbares Krimpgehäuse. Dies erlaubt eine ausserordentlich kostengünstige Verbindung mit wenig stens einer Krimpung.

Die Zugentlastung wird nach allen Varianten wenigstens teilweise umgebogen und festgeklemmt. Jede Zugeinwirkung auf das optische Kabel wird so direkt von der Zugentlastung aufgefangen, ohne dass eine Kunststoffummantelung verformt oder gar gequetscht werden muss. Die Druckanwendung auf die Zugentlastung kann sehr hoch sein, deren Glasfasern werden nicht beschädigt, weil kein Druck auf sie ausgeübt wird.

Eine erfindungsgemässe Verbindungsmuffe mit Durchgangshalterungen zum Verbinden von zwei Lichtwellenleiterkabeln mit wenigstens einem verspleissten Lichtwellenleiter besteht aus zwei einteiligen Schalen, wobei die Durchgangshalterungen in einer Ringnut mit einem Anschlag und einem Steg in Längsrichtung unverschiebbar befestigt sind.

Vorzugsweise bestehen die einteiligen Schalen der Verbindungsmuffe aus einem gespritzten Kunststoff oder Metall. Weiter haben die Schalen zweckmässig seitliche Schnappverschlüsse.

Die Verbindungsmuffe kann mit an sich bekannten Halterungen befestigt werden, insbesondere mit einem Einschnapp- oder einem Kippverschluss aus Kunststoff.

Auf das optische Kabel einwirkende Zugkräfte werden vollständig auf die Verbindungsmuffe übertragen, keine Glasfaser von niedriger Zugfestigkeit wird beeinträchtigt.

Eine Gehäusewand mit einer Durchgangshalterung als erfindungsgemässe Endmuffe eines Lichtwellenleiterkabels ist nach einer Weiterausbildung der Erfindung Bestandteil der Druckhülse oder des Krimpgehäuses, indem eine topfförmige Aussparung eine dem ringförmig abkragenden Teil der Druckhülse oder des Krimpgehäuses entsprechende Scheibe mit angeformtem Ansatz aufnimmt.

Die in einem Gehäuse verspleissten Fasern führen beispielsweise zu einem optischen Stecker oder einem Uebertragungsgerät, welches letztere elektrische in optische Signale umwandelt, oder umgekehrt.

Die Erfindung wird anhand der in der Zeichnung dargestellten Beispielen, welche auch Gegenstand von abhängigen Patentansprüchen sind, näher erläutert. Es zeigen schematisch:

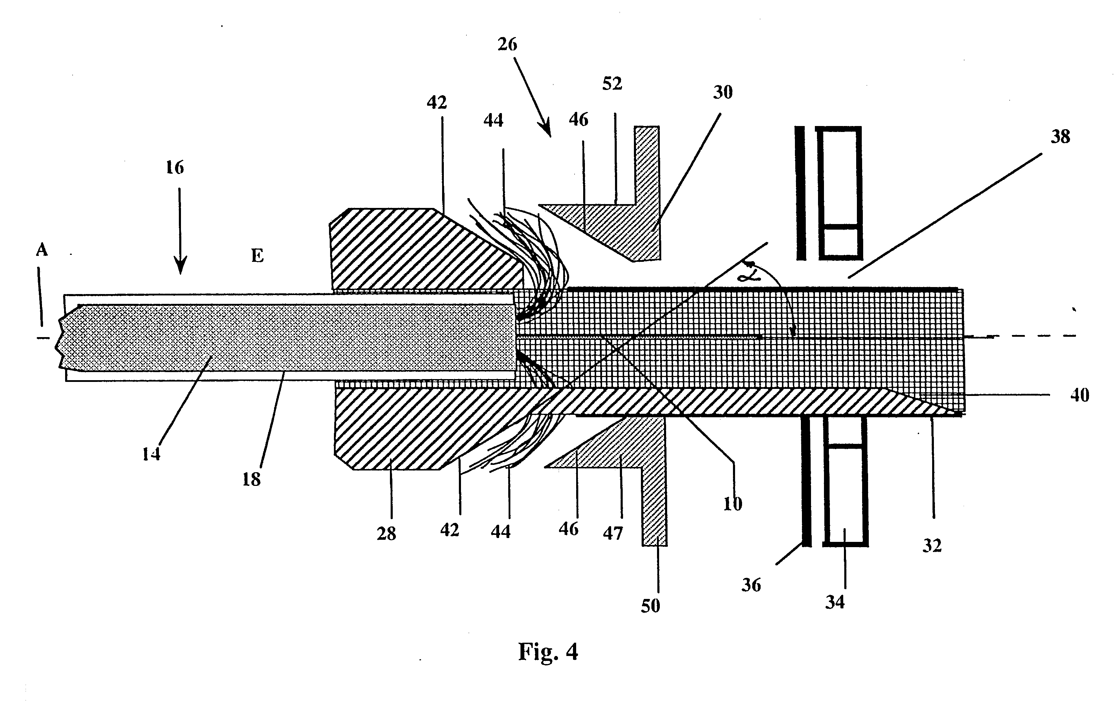

- Fig. 4 einen Axialschnitt einer Durchgangshalterung mit formschlüssigen konischen Klemmflächen,

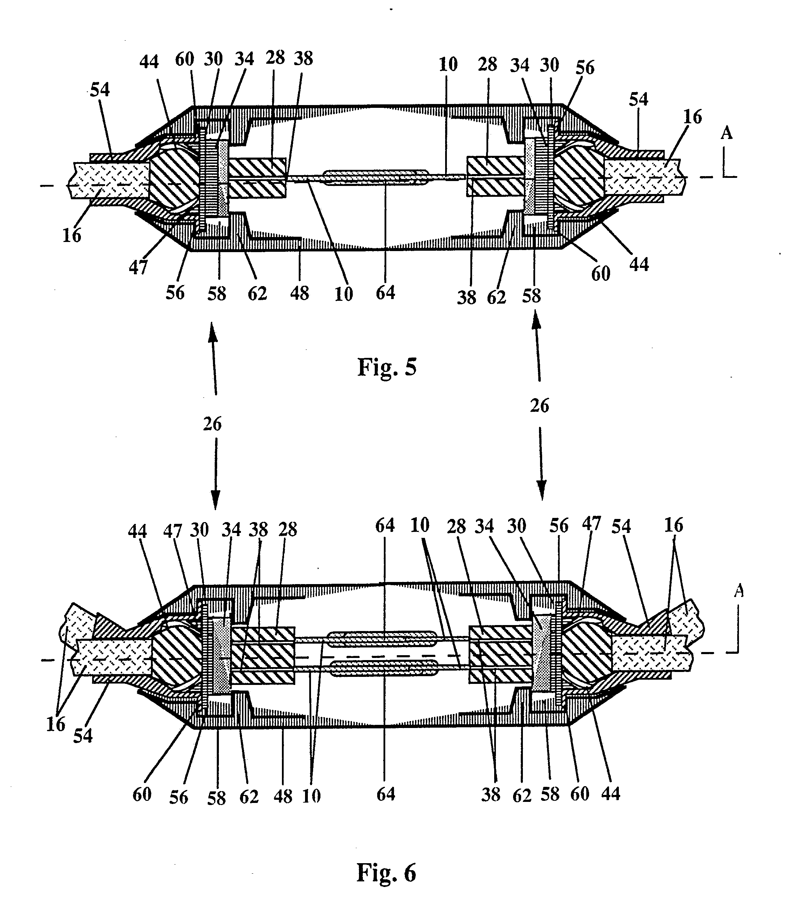

- Fig. 5 eine aufgeschnittene Ansicht einer Verbindungsmuffe,

- Fig. 6 eine Variante von Fig. 5,

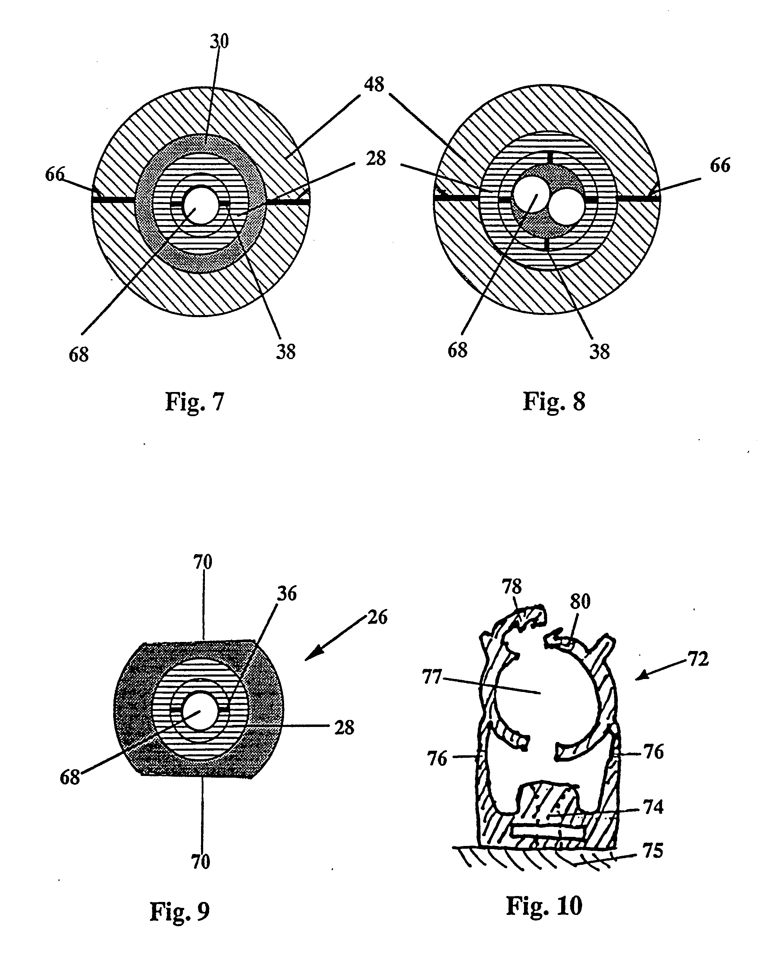

- Fig. 7 eine Stirnansicht einer Verbindungsmuffe mit einer eingelegten Durchgangshalterung, ohne optische Kabel,

- Fig. 8 eine Variante von Fig. 7,

- Fig. 9 eine Stirnansicht einer Durchgangshalterung, ohne optisches Kabel,

- Fig. 10 einen Schnitt durch eine Halterung für Verbindungsmuffen,

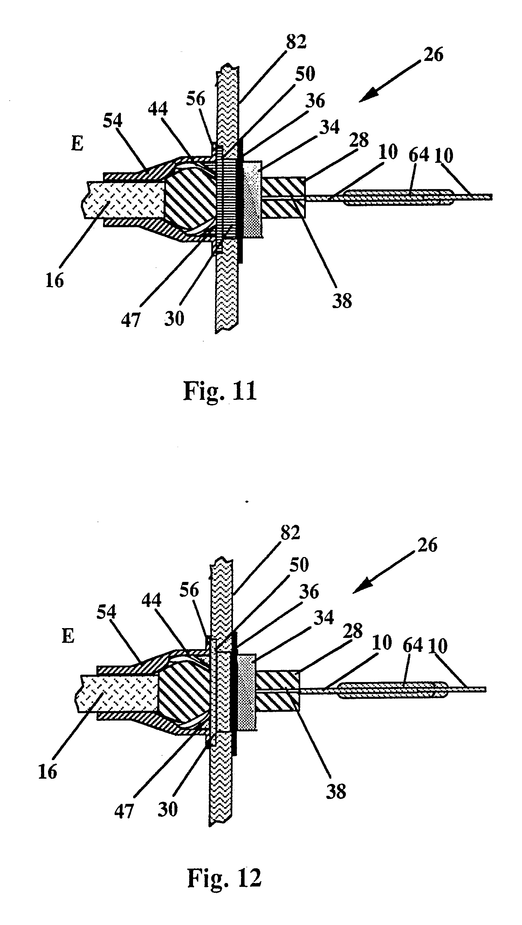

- Fig. 11 eine Durchgangshalterung in einer Gehäusewand,

- Fig. 12 eine Durchgangshalterung mit einer Gehäusewand als Bestandteil,

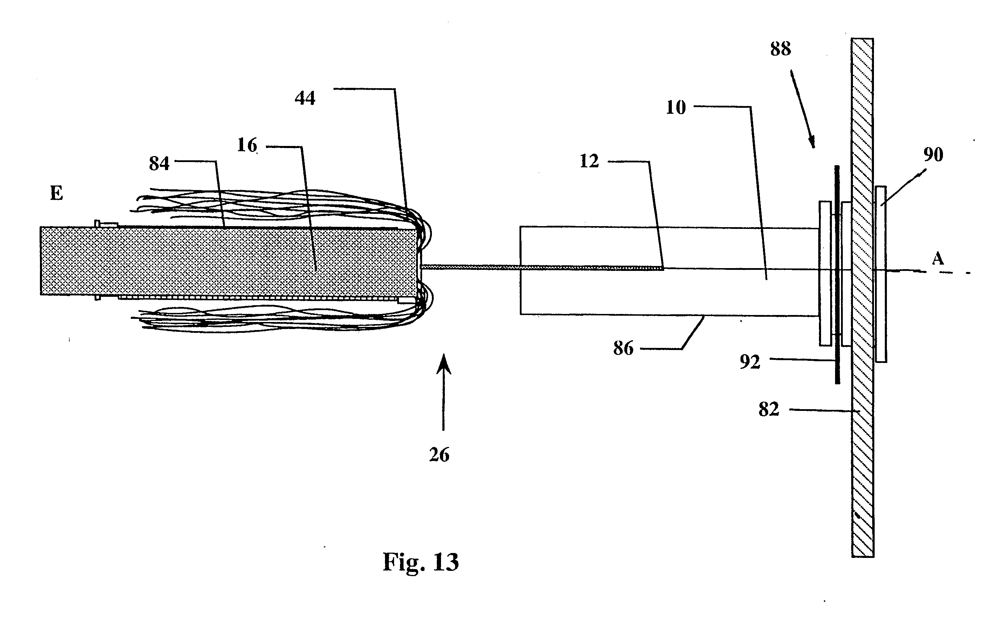

- Fig. 13 einen Axialschnitt einer krimpbaren Durchgangshalterung,

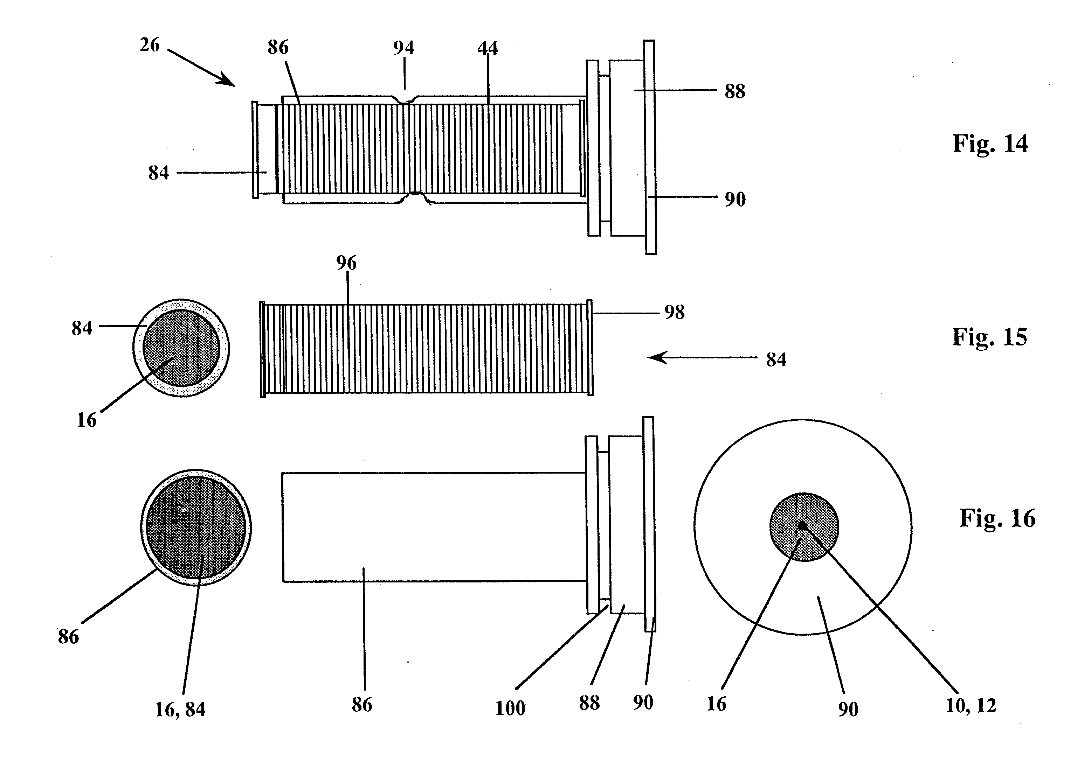

- Fig. 14 eine aufgeschnittene Ansicht eines Krimpgehäuses mit einer Krimphülse,

- Fig. 15 eine Krimphülse, mit stirnseitiger Ansicht, und

- Fig. 16 ein Krimpgehäuse, mit stirnseitigen Ansichten.

Eine Durchgangshalterung 26 gemäss Fig. 4 besteht im wesentlichen aus einer Führungshülse 28, einer Druckhülse 30, einer in einem Aussengewinde 32 geführten Schraubenmutter 34 und einer Unterlagsscheibe 36.

Die Führungshülse 28 weist entlang der Längsachse A eine Bohrung für das optische Kabel 16 auf. Weiter weist die Führungshülse 28 im vorliegenden Fall drei Führungsschlitze 38 auf, welche sich von der mit einem Auslaufkonus 40 versehenen Stirnseite bis zur Klemmfläche 42, ebenfalls ein Konus, erstrecken. Die Führungsnuten 38, von welchen eine angedeutet ist, sind etwa 1 mm breit. Die Schnittebene von Fig. 4 verläuft durch eine der Führungsnuten 38. Je nach Kabeldurchmesser ist die Anzahl von Führungsnuten 38 grösser oder kleiner, ebenso schwankt deren Breite in der Regel zwischen 0,5 und 5 mm, je nach Kabeldurchmesser.

Das auf der Einlaufseite E in die Führungshülse 28 eingeführte optische Kabel 16 liegt bei der Eintrittsöffnung satt an der Wand der Bohrung in der Führungshülse 28 an. Im Innern der Führungshülse endet der Aussenmantel 18 vor dem Erreichen der Klemmfläche 42. Dieser ist vorgängig entfernt worden. Die Fasern 44 der Zugentlastung 14, oder wenigstens ein Teil davon, sind durch die Führungsschlitze 38 aus der Bohrung 68 (Fig. 7 - 9) der Führungshülse 28 geführt und entlang der Klemmfläche 42 verteilt angeordnet. Auch ausserhalb des Bereichs der Führungsschlitze 38 befinden sich vereinzelte Fasern 44. Der Uebersichtlichkeit wegen sind auch ausserhalb der Schnittebene liegende Fasern 44 gezeichnet.

Zum Befestigen der Fasern 44 der Zugentlastung 14 wird die Druckhülse 30, welche auf dem Aussengewinde 32 der Führungshülse 28 verschiebbar ist, mit ihrer Klemmfläche 46 gegen den Kopf der Führungshülse 28 geführt.

Die beiden Klemmflächen 42, 46 haben exakt den gleichen Winkel $\alpha$ zur Längsachse A. Der Winkel $\alpha$ liegt bei etwa 30°. Die Klemmflächen öffnen sich in Richtung der Einlaufseite E.

Die Druckhülse 30, welche einen angeformten Ansatz 47 mit einem Aussenmantel 52 und der Klemmfläche 46 aufweist, wird mit der Schraubenmutter 34 und der Unterlagsscheibe 36 festgestellt. Die umgebogenen Fasern 44 der Zugentlastung 14 bleiben festgeklemmt. Eine Zugbelastung des optischen Kabels 16 wird vollständig von der Zugentlastung 14 aufgefangen. Die Glasfaser 10 wird nicht belastet.

In der in Fig. 5 dargestellten Verbindungsmuffe 48 sind zwei Durchgangshalterungen 26 eingelegt. Ueber den Aussenmantel 52 (Fig. 4) der Druckhülse 30 ist ein Knickschutz 54 aus Gummi gezogen, bis er mit seinem Stirnflansch 56 an einem ringförmig abkragenden Teil 50 (Fig. 4) der Druckhülse 30 anliegt. Der Knickschutz 54 liegt ebenfalls satt auf dem optischen Kabel 16 auf. So wird verhindert, dass schädigende Medien in das Innere der Verbindungsmuffe 48 eindringen können.

Alternativ oder ergänzend zum Knickschutz 54 kann die ganze Verbindungsmuffe 48 mit einer nicht gezeichneten Schrumpffolie überzogen werden.

Das Gehäuse der Verbindungsmuffe 48 weist an beiden Stirnseiten eine Ringnut 58 auf. Der ringförmig abkragende Teil 50 (Fig. 4) der Druckhülse 30 ragt in diese Ringnut hinein. Ein Anschlag 60 nimmt, unter Zwischenlage des leicht federnden Stirnflanschs 56 des Knickschutzes 54, auf das optische Kabel 16 einwirkende, von der Zugentlastung 14 übertragende Zugkräfte auf.

Ein Steg 62 verhindert ein Verschieben der Durchgangshalterungen 26 in Richtung des Gehäuseinnern der Verbindungsmuffe 48. Die Glasfasern bzw. der Lichtwellenleiter 10 haben eine Spleissverbindung 64, welche in bekannter Weise hergestellt wird.

Die in Fig. 6 dargestellte Verbindungsmuffe 48 dient der Verbindung von optischen Duplexkabeln 16. Beide Glasfasern 10 weisen im Innenraum der Verbindungsmuffe 48 eine Spleissverbindung 64 auf.

Verbindungsmuffen gemäss Fig. 5 und 6 werden mit bekannten Verfahren aus Kunststoff oder Metall hergestellt, insbesondere mit einer Spritzform. Die Verbindungsmuffe erlaubt im Zusammenwirken mit den Durchgangshalterungen eine einfache Verbindung von Lichtwellenleiterkabeln 16, welche nicht nur Zugbeanspruchungen in optimaler Weise auffängt, sondern den Verbindungsbereich gegen äussere schädigende Einflüsse schützt. Die Verbindungsmuffen 48 sind preisgünstig herzustellen, handlich und mit einfachen Mitteln befestigbar.

Fig. 7, 8 zeigen Verbindungsmuffen, die je aus zwei einteiligen Schalenhälften bestehen. Mit zwei seitlichen Schnappverschlüssen 66 bekannter Bauart werden die beiden Schalen aufeinander gedrückt. Die Verbindung ist vorzugsweise feuchtigkeits- und gasdicht ausgebildet.

In der stirnseitigen Oeffnung der Verbindungsmuffen 48 ist die Durchgangshalterung mit der zentral angeordneten Führungshülse 28 sichtbar. Diese weist eine Bohrung 68 für ein optisches Einzelfaserkabel 16 (Fig. 7) oder ein Duplexkabel (Fig. 8) auf.

Gut erkennbar sind die in vertikaler Richtung zum Zeichnungsblatt verlaufenden Führungsschlitze 38, zwei in Fig. 7, vier in Fig. 8.

In Fig. 7 ist noch ein Teil der Druckhülse 30 erkennbar.

Fig. 9 zeigt einen Querschnitt einer Durchgangshalterung 26 mit abgeflachter Druckhülse 30. Die beiden parallel verlaufenden Abflachungsebenen 70 erlauben in erster Linie eine Platzersparnis bei der Lagerung.

In Fig. 10 ist eine Halterung 72 aus einem Polyamid für Verbindungsmuffen 48 dargestellt. Die Halterung 72 wird mit einer in das angedeutete Schraubenloch 74 eingeführten Schraube an der Unterlage 75 befestigt. Die Verbindungsmuffe 48 kann durch Abbiegen der federnden Schenkel 76 in die Oeffnung 77 eingeführt werden. Dann wird der Profillappen 78 über den Profillappen 80 gezogen und mit diesem verhakt. Damit ist die Verbindungsmuffe 48 befestigt.

Fig. 11 zeigt eine zugentlastende Endmuffe eines optischen Kabels 16 mit einer Glasfaser 10 in einer Gehäusewand 82. Die Druckhülse 30 mit dem ringförmig nach aussen abkragenden Teil 50 ist separat in der Gehäusewand 82 eingelassen und durchgreift diese in einer entsprechenden Bohrung. Der ringförmig abkragende Teil 50 ist flächenbündig in einer entsprechenden Aussparung versenkt. Mit der Schraubenmutter 34, welche über die Unterlagsscheibe 36 auf die Gehäusewand 82 einwirkt, wird die Druckhülse 30 fixiert, wobei die beiden konusförmigen Klemmflächen 42, 46 (Fig. 4) mit den dazwischen liegenden, umgebogenen Fasern 44 der Zugentlastung 14 aufeinander gedrückt werden. Damit werden sämtliche auf das optische Kabel 16 einwirkenden Zugkräfte direkt auf die Gehäusewand 82 übertragen und von dieser aufgefangen. Die Glasfaser 10, welche mit einer andern, beispielsweise zu einem Uebertragungsgerät führenden Glasfaser 10 verspleisst ist, erleidet keinerlei mechanische Einwirkungen.

Der Unterschied von Fig. 12 zu Fig. 11 besteht darin, dass in Fig. 12 die Gehäusewand 82 einen Teil der Druckhülse 30 ersetzt. Lediglich die Führungshülse 28 ist durch eine Bohrung in der Gehäusewand 82 geführt. Auf der Einlaufseite E des optischen Kabels 16 hat die Gehäusewand 82 eine topfförmige Aussparung. Darin liegt eine dem ringförmig nach aussen abkragenden Teil der Druckhülse 30 von Fig. 11 entsprechende, einfachheitshalber ebenfalls mit 50 bezeichnete Scheibe mit der Klemmfläche 46 und dem Aussenmantel 52 auf einem der Scheibe 50 angeformten Ansatz 47 (Fig. 4).

Beim Anziehen der Schraubenmutter 34 wird die Führungshülse 28 so verschoben, dass die Scheibe 50 durch Krafteinwirkung über die Klemmflächen 42, 46 (Fig. 4) befestigt ist. Bezüglich des optischen Kabels 16 wird die gleiche Wirkung wie in Fig. 11 entfaltet.

Fig. 13 zeigt eine Variante der Durchgangshalterung 26, welche im wesentlichen eine Krimphülse 84 und ein Krimpgehäuse 86 umfasst. Die umgebogenen Fasern 44 der Zugentlastung 14 (Fig. 3) werden in Längsrichtung zwischen die beiden Klemmflächen der Armaturen 84, 86 gelegt und gekrimpt.

Die Krimphülse 84 wird über das stirnseitige Ende des Lichtwellenleiterkabels 16 mit der freigelegten Glasfaser und den freien Fasern der Zugentlastung gestreift. Dabei sind die Stirnseiten der Krimphülse 84 und des Lichtwellenleiterkabels 16 etwa bündig, was jedoch nicht von wesentlicher Bedeutung ist.

Ein stirnseitiges Profil 88 des Krimpgehäuses 86 durchgreift eine nicht dargestellte Bohrung in der Gehäusewand 82. Die Sicherung erfolgt einends der Gehäusewand 82 mittels eines ringförmig abstehenden Flanschs 90, andernends mit einem klemmenden Stahlring 92, im Prinzip einem O-Ring.

Abweichend von Fig. 13 kann das Krimpgehäuse 86 auch vom Profil 88 her mit Gegenrillen befestigt werden.

Zwischen dem Krimpgehäuse 86 und der Krimphülse 84 der Durchgangshalterung 26 gemäss Fig. 14 sind Fasern 44 der Zugentlastung angedeutet. Diese sind an einer Krimpstelle 94, wo das Krimpgehäuse deformiert und auf die Krimphülse 84 gedrückt ist, festgeklemmt. Selbst bei grosser Zugbelastung bietet die Krimpverbindung 84 den um 180° umgebogenen Fasern 44 genügend Halt. Die formfeste Krimphülse 84 ist nicht oder nur unmerklich verformt.

Die Klemmhülse gemäss Fig. 15 weist Querrillen 96 und je einen stirnseitigen Wulst 98 auf, letztere auch Lippen genannt. Die auch in Form einer Schraubenlinie ausgebildeten Querrillen 96 sind nicht scharfkantig ausgebildet. Sie dienen dazu, den Gleitwiderstand der Fasern 44 in Längsrichtung und den durch das Krimpen notwendigen Quetscheffekt auf einem Minimum zu halten. Eine durchaus mögliche glatte Oberfläche ist in den meisten Fällen hinreichend. Die Lippe 98 in Richtung der freien Lichtfaser 10 wird zweckmässig entfernt, damit die Fasern 44 nicht über einen vorstehenden Rand gebogen werden müssen.

Die linksliegende Seitenansicht zeigt, dass das Lichtwellenleiterkabel 16 satt auf der Innenfläche der Krimphülse 84 anliegt.

Das in Fig. 16 gezeigte Krimpgehäuse 86 weist ein Profil 88 mit einem aussenliegenden Flansch 90 und einer Ringnut 100 für den Stahlring 92 (Fig. 13) auf. In der linksliegenden Seitenansicht sind Lichtwellenleiterkabel 16 und Krimphülse 84 dunkel gezeichnet, in der rechtsliegenden Seitenansicht nur das Lichtwellenleiterkabel 16 mit dem Lichtfasermantel 12 und der Glasfaser 10. Die Bohrung ist kleiner, weil das Kabel 16 nicht durchtreten muss.

**Ansprüche**

1. Durchgangshalterung mit einem eingespannten, zugfesten Lichtwellenleiterkabel (16), wobei die Durchgangshalterung (26) im wesentlichen aus zwei in Längsrichtung (A) relativ zueinander verschiebbaren, das Lichtwellenleiterkabel (16) umgebenden Armaturen (28, 30, 84, 86) mit übereinanderschiebbaren Klemmflächen besteht, und eine Zugentlastung (14) des Lichtwellenleiterkabels (16) im Inneren der Halterung (26) freigelegt ist, dadurch gekennzeichnet, dass die Klemmflächen der Armaturen (28, 30, 84, 86) in Längsrichtung (A) oder sich in Richtung der Einlaufseite (E) des optischen Kabels (16) konusförmig öffnend verlaufen, und die Zugentlastung (14) wenigstens teilweise zwischen den Klemmflächen verlegt und eingespannt ist.

2. Durchgangshalterung nach Anspruch 1, dadurch gekennzeichnet, dass sie zwei formschlüssig verlaufende, sich konusförmig öffnende Klemmflächen (42, 46) und Mittel zum Feststellen von Armaturen (28, 30) umfasst, wobei der Winkel ($\alpha$) der Konusflächen (42, 46) zur Längsachse (A) unterhalb etwa 45°, vorzugsweise bei etwa 30°, liegt.

3. Durchgangshalterung nach Anspruch 2, dadurch gekennzeichnet, dass die Armaturen (28, 30) eine Führungshülse (28) mit wenigstens zwei sich in Längsrichtung (A) durchgehend bis zur Klemmfläche (42) erstreckenden, die Zugentlastung (14) wenigstens teilweise zwischen die Klemmflächen (42, 46) umlenkenden Führungsschlitzen (38) und eine Klemmhülse (30) mit einer der konusförmigen Klemmfläche (42) der Führungshulse (28) entsprechenden konusförmigen Klemmfläche (46) sind, welche Klemmhülse (30) auf der Führungshülse (28) bis zum Anschlag der Klemmflächen (42, 46) geführt gleitend verschiebbar ist.

4. Durchgangshalterung nach Anspruch 2 oder 3, dadurch gekennzeichnet, dass die Führungshülse (28) ein Aussengewinde (32) hat, und eine auf diesem Aussengewinde (32) geführte Schraubenmutter (34) zur Erzeugung des Klemmdrucks an die Bruckhülse (28) anstellbar ist, vorzugsweise unter Zwischenlage einer Unterlagscheibe (36),die Druckhülse (30) einen nach aussen ringförmig abkragenden Teil (50) und auf der Einlaufseite (E) des Lichtwellenleiterkabels (16) vorzugsweise einen Ansatz (47) mit einem Aussenmantel (52) für die innenliegende Klemmfläche (46) hat.

5. Durchgangshalterung nach Anspruch 1, dadurch gekennzeichnet, dass sie eine über den Kabelmantel (18) gestreifte, verformungsfeste Krimphülse (84) und ein darüber geschobenes, verformbares Krimpgehäuse (86) umfasst.

6. Durchgangshalterung nach Anspruch 5, dadurch gekennzeichnet, dass die Krimphülse (84) auf ihrem Aussenmantel Querrillen (96) oder schraubenförmige Rillen aufweist und vorzugsweise aus dem Krimpgehäuse (86) herausragt.

7. Durchgangshalterung nach Anspruch 5 oder 6, dadurch gekennzeichnet, dass das Krimpgehäuse (86) einends ein Stirnprofil (88) zur Befestigung aufweist, welches seinerseits einen ringförmig abkragenden Flansch (90) und eine Ringnut (100) für einen Stahlring (92) hat.

8. Durchgangshalterung nach einem der Ansprüche 1 bis 7, dadurch gekennzeichnet, dass der austretende Aussenmantel (52) mit einem Knickschutz (54) überzogen ist.

9. Durchgangshalterung nach einem der Ansprüche 1 bis 8, dadurch gekennzeichnet, dass die Zugentlastung (14) aus hochmodularen, flexiblen Fasern (44) besteht, welche vorzugsweise als Schnüre verseilt sind.

10. Durchgangshalterung nach Anspruch 9, dadurch gekennzeichnet, dass die zugentlastenden Fasern (44) aus Kohlenstoff, Siliziumkarbid oder Aramid bestehen.

11. Verbindungsmuffe mit Durchgangshalterungen (26) nach einem der Ansprüche 1 bis 10 zum Verbinden von zwei Lichtwellenleiterkabeln (16) mit wenigstens einem verspleissten Lichtwellenleiter (10), dadurch gekennzeichnet, dass die Verbindungsmuffe (48) aus zwei einteiligen Schalen besteht, wobei die Durchgangshalterungen (26) in einer Ringnut (58) mit einem Anschlag (60) und einem Steg (62) in Längsrichtung (A) unverschiebbar befestigt sind.

12. Verbindungsmuffe nach Anspruch 11, dadurch gekennzeichnet, dass die einteiligen Schalen aus einem gespritzen Kunststoff oder Metall bestehen und vorzugsweise seitliche Schnappverschlüsse (60) haben.

13. Endmuffe mit einer Durchgangshalterung (26) nach einem der Ansprüche 1 bis 10 als Endbefestigung eines Lichtwellenleiterkabels (16), dadurch gekennzeichnet, dass eine Gehäusewand (82) Bestandteil der Druckhülse (30) bzw. des Krimpgehäuses (86) ist, indem eine topfförmige Aussparung eine dem ringförmig abkragenden Teil (50) der Druckhülse (30) bzw. des Krimpgehäuses (86) entsprechende Scheibe mit angeformtem Ansatz (47 oder 88) aufnimmt.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

EP 0 389 435 A1

Europäisches Patentamt

**EUROPÄISCHER RECHERCHENBERICHT**

Nummer der Anmeldung

EP 90 81 0207

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X,D | PATENT ABSTRACTS OF JAPAN, Band 5, Nr. 177 (P-89)[849], 13. November 1981, Seite 25 P 89; & JP-A-56 106 205 (KOKUSAI DENSHIN DENWA K.K.) 24-08-1981 * Zusammenfassung * | 1 | G 02 B 6/44<br>G 02 B 6/24<br>G 02 B 6/38 |
| Y,D | FR-A-2 426 920 (N.R.D.C.) * Seite 4, Zeilen 3-24; Patentansprüche; Abbildung * | 1 | |
| A | | 2,4,9, 10 | |
| Y | PATENT ABSTRACTS OF JAPAN, Band 11, Nr. 121 (P-568)[2568], 16. April 1987; & JP-A-61 267 007 (SEIKO GIKEN K.K.) 26-11-1986 * Zusammenfassung * | 1 | |
| A | PATENT ABSTRACTS OF JAPAN, Band 7, Nr. 82 (P-189)[1227], 6. April 1983, Seite 55 P 190; & JP-A-58 14 107 (SUMITOMO DENKI KOGYO K.K.) 26-01-1983 * Zusammenfassung * | 1,8 | RECHERCHIERTE SACHGEBIETE (Int. Cl.5)<br><br>G 02 B<br>H 02 G |
| A | FR-A-2 394 875 (POST OFFICE) * Patentansprüche; Abbildungen * | 1,13 | |
| A | GB-A-2 140 226 (G.C.N.) * Zusammenfassung; Abbildung * | 1 | |
| A | DE-A-2 825 845 (SIEMENS) * Seite 5, Zeilen 28-30 * | 9,10 | |

Der vorliegende Recherchenbericht wurde für alle Patentansprüche erstellt

| Recherchenort | Abschlußdatum der Recherche | Prüfer |
|---|---|---|
| DEN HAAG | 21-06-1990 | PFAHLER R. |

EPO FORM 1503 03.82 (P0403)